# EUROPÄISCHE PATENTSCHRIFT

(11) **EP 2 802 246 B1**
(45) Veröffentlichungstag und Bekanntmachung des Hinweises auf die Patenterteilung: **06.07.2016**
(21) Anmeldenummer: 13706712.0
(22) Anmeldetag: 10.01.2013
(51) Int. Cl.: A47J 36/00, A47J 37/00

(54) **POPCORN-RÜHRER**
POPCORN STIRRER
AGITATEUR POUR POPCORN

(30) Priorität: 12.01.2012 DE 202012000273 U
(43) Veröffentlichungstag der Anmeldung: 19.11.2014
(73) Patentinhaber: Popcornloop GmbH, 90459 Nürnberg (DE)
(72) Erfinder: AKBULUT, Murat, 90473 Nürnberg (DE)
(74) Vertreter: Küchler, Stefan
(86) Internationale Anmeldenummer: PCT/IB2013/000028
(87) Internationale Veröffentlichungsnummer: WO 2013/104979

(56) Entgegenhaltungen:
- DE-U1- 8 607 438
- US-A1- 2004 194 633
- US-S1- D 636 215

## Beschreibung

Die Erfindung richtet sich auf eine Vorrichtung zur Herstellung von Popcorn in einem Kochtopf od. dgl.

Popcorn wird durch Erhitzen einer speziellen Maissorte - dem sog. Puffmais - hergestellt. Dieser besteht aus einem stärkehaltigen, innenliegendem Gewebe, worin größere Mengen Feuchtigkeit gespeichert sind, und eine vergleichsweise harte Schale. Bei der Herstellung von Popcorn werden diese Maiskörner bis weit über 100 °C erhitzt, bspw. bis etwa 200 °C, wobei die enthaltene Feuchtigkeit vom flüssigen in den gasförmigen Zustand übergeht. Zwar möchte sich der dabei entstehende Dampf ausdehnen; dies gelingt indes nicht, weil das Maiskorn von einer harten Schale umgeben ist, welche den Dampf nicht entweichen läßt. Innerhalb des Maiskorns baut sich daher ein immer weiter ansteigender Druck auf, der bei etwa 200 °C die Hülle zerplatzen läßt - das stärkehaltige Gewebe tritt in aufgeblähter Form aus und kühlt sich dabei augenblicklich ab. Die maßgebenden äußeren Parameter sind also Temperatur und ggf. Druck. Sofern eine Privatperson Popcorn ohne eine spezielle Maschine zubereiten möchte, kann sie allenfalls die Temperatur beeinflussen. Dazu gibt es bspw. die Möglichkeit, die Maiskörner in einem Mikrowellenherd so weit zu erhitzen, bis sie platzen. Dies funktioniert zwar grundsätzlich, jedoch hat die Praxis gezeigt, dass derart zubereitetes Popcorn - also ohne Verwendung von Öl - etwas trocken schmeckt. Desweiteren kann es auch bei der Zubereitung von Popcorn in der Mikrowelle leicht zum Anbrennen kommen, da das Gefäß während der Zubereitung nicht geschüttelt werden kann. Versucht man diesem Nachteil auszuweichen, indem man beispielsweise die Gardauer reduziert, so geht häufig ein Teil der Maiskörner nicht auf, was ebenso unerwünscht ist. Unter geschmacklichen Aspekten wird meist eine Zubereitung bevorzugt, wobei zunächst Öl in einem Topf erhitzt wird, sodann wird der Puffmais dazugegeben. Damit die explodierenden Maiskörner dabei nicht aus dem Kochtopf springen, muss der Deckel aufgesetzt werden. Damit ist der Zugang zum Topfinneren verwehrt, und um zu vermeiden, dass die unterste Schicht der Maiskörner anbrennt, wird der Kochtopf in gewissen Abständen auf dem Herd kurz geschüttelt. Dies ist jedoch nicht optimal, und ein gewisser Anteil der Maiskörner entgeht dabei leider nicht dem Schicksal des Anbrennens und verdirbt anschließend den eigentlich guten Geschmack des fertigen Snacks.

Im Stand der Technik wurden zwar Lösungsansätze unternommen, um den oben geschilderten Nachteilen abzuhelfen; diese erweisen sich jedoch in der Praxis als wenig geeignet:
Beispielsweise beschreibt die US 2008/0223220 A1 einen speziellen Topf, der sich nur für die Herstellung von Popcorn eignet. Am Boden dieses Topfes ist ein kleiner Rührer installiert, der von unten angetrieben wird. Dieser Topf birgt den Nachteil in sich, dass der Verbraucher sich ein teures Küchenutensil anschaffen muß, welches beim Wegräumen und Aufbewahren viel Platz beansprucht, und welches nur für einen einzigen Zweck geeignet ist, eben die Herstellung von Popcorn. Ferner ist der am Boden installierte Rührer derart ausgeführt, dass er leicht mit dem Mais verkleben kann und dieser dann dennoch anbrennt. Außerdem ist der Rührer erst nach dem Erkalten und Entleeren des Topfes zu erreichen und somit einer direkten einfachen Reinigung nicht zugänglich.

Auch die US 2011/0247503 A1 offenbart einen speziellen Topf, der ausschließlich für die Herstellung von Popcorn herangezogen werden kann. Dieser Topf ist unten gewölbt und kann ausschließlich durch eine unterhalb des Bodens brennende Gasflamme befeuert werden, sodass er nur in Haushalten mit Gasanschluss benutzt werden kann. Der Topf verfügt weiterhin über einen planen, starren Deckel mit einem mittig von oben installierten Rührer, welcher mit einem Elektromotor angetrieben wird und über einen eigenen Energieversorgungsanschluß verfügt. Somit sind zu Betätigung dieses Topfes Versorgungsleitungen erforderlich, was von Nachteil ist. Zusätzlich erhitzt sich der starre Deckel leicht, so dass man zum Herunternehmen entweder Topflappen verwenden muss oder den Topf abkühlen lassen muss. Weiterie Stand der Technik Dokumente sind: US2004/194633, DE8607438, US636215.

Aus den Nachteilen des beschriebenen Standes der Technik resultiert das die Erfindung initiierende Problem, eine Vorrichtung zur Herstellung von Popcorn zu schaffen, die platzsparend verstaut werden kann, kostengünstig in der Anschaffung und leicht zu reinigen ist. Die Vorrichtung soll verhindern, dass der Anwender sich beim Rühren verbrennt und gewährleisten, dass die Maiskörner während der Popcorn-Zubereitung weder anbrennen noch beim Explodieren den Kochtopf verlassen.

Die Lösung dieses Problems gelingt durch ein langgestrecktes Rührgerät, dessen Schaft an seinem oberen Ende einen Griff aufweist zum manuellen Führen des Rührgerätes, sowie an seinem unteren Ende eine Kratzeinrichtung zum Lösen angesetzten Popcorns vom Boden des Kochgeschirrs, sowie durch eine flexible, hitzebeständige Haube zum Überstülpen über den Rand des Kochgeschirrs, mit einer Öffnung zum Hindurchstecken des Schaftes des Rührgerätes derart, dass sich dessen Griff oberhalb der flexiblen Haube befindet, die Kratzeinrichtung dagegen unterhalb derselben.

Dabei übernimmt die Haube die Aufgabe, das umherspringende Popcorn innerhalb des Kochgefäßes zurückzuhalten, während die Maiskörner mit dem Rührgerät gleichzeitig und permanent umgerührt werden können, um ein Anbrennen zu vermeiden. So läßt sich auch von Laien mit geringem Aufwand wohlschmeckendes Popcorn zubereiten. Die erfindungsgemäße Rührvorrichtung ist günstig in der Anschaffung und lässt sich platzsparend verstauen, so dass sie von jedem normalen Verbaucher benutzt werden kann. Darüber hinaus ist die erfindungsgemäße Rührvorrichtung nicht nur für die Zubereitung von Popcorn aus Mais geeignet, vielmehr kann sie auch für alle anderen Lebensmittel benutzt werden, die beim Kochen oder Erwärmen leicht ansetzen. Beispielsweise können auch andere geeignete Getreidekörner gepufft werden (z.B. Quinoa, Amarant, Puffreis und Weizen), die gerne auch unter Müslimischungen gerührt werden. Aber auch andere, anbrenngefährdete Lebensmittel, die beim Kochen ständig umgerürt werden sollten wie beispielsweise Milch, können mit der erfindunggemäßen Vorrichtung gefahrlos und bequem umgerührt werden.

Weitere Vorteile ergeben sich dadurch, dass die flexible, hitzebeständige Haube aus einem feuerfesten Material besteht. Das Material sollte einerseits derart ausgewählt werden, dass es hitzebeständig ist und insbesondere auch Temperaturen oberhalb von 200 °C standhält, wie sie beim Zubereitungsprozeß von Popcorn auftreten. Desweiteren muß das Material gefahrlos auch auf Gasherden verwendet werden können. Da die Haube aufgrund des hochspringenden Popcorns an der Innenseite auch mit Fett und/oder Öl in Kontakt gelangt, so dass die Brandgefahr erhöht ist, muß sichergestellt werden, dass das verwendete Gewebe der Haube feuerfest oder zumindest flammenhemmend ist. Dazu eignen sich insbesondere textile Materialien, Kevlar, Nomex, feuerhemmende Gewebe auf Basis von Naturstoffen.

Ferner sollte die flexible, hitzebeständige Haube aus einem dichten, insbesondere für Flüssigkeiten undurchdringlichen Material bestehen. Es ist besonders wichtig, dass hochspritzendes Fett nicht von der Innenseite der Haube zu deren Außenseite durchdringen kann, wo es sich möglicherweise entzünden könnte.

Da die meisten Töpfe rund sind, sollte auch die Grundfläche der flexiblen, hitzebeständigen Haube ein Kreis sein. Aber auch andere geometrische Formen (viereckig oder oval), insbesondere zur Verwendung mit anders geformten Töpfen, wären denkbar.

Die flexible, hitzebeständige Haube sollte an ihrem Außenumfang einen Gummizug aufweisen, welcher bestrebt ist, den Außenumfang der Haube zu verringern. Dadurch kann ein und dieselbe Haube einerseits mit Kochtöpfen verschiedenen Durchmessers benutzt werden und verschließt diese jeweils dicht, so dass weder im Topf umher springenden Maiskörner diesen verlassen können noch heißes Öl oder Fett aus dem Topf herausspritzt, welches den Benutzer verbrennen oder gar Feuer fangen könnte.

Der Gummizug erlaubt auf einfache und gleichzeitig zuverlässige Weise, den Topf zu verschließen, und er paßt sich dabei automatisch der Form und Größe des betreffenden Topfes an.

Die flexible Haube sollte etwa in ihrem Zentrum, bei kreisförmigen Hauben also im Kreismittelpunkt, eine Öffnung aufweisen, durch die der erfindungsgemäße Rührstab hindurchgesteckt werden kann. Damit ist die Möglichkeit eröffnet, dass die Rühreinrichtung betätigt werden kann, ohne die Haube abzunehmen.

Es hat sich als günstig erwiesen, dass die flexible Haube an ihrem Innenumfang einen Ring aufweist, bspw. aus Metall oder als Gummizug ausgestaltet, zur Stabilisierung der Durchstecköffnung.

Der Schaft des Rührgerätes sollte zwei voneinander beabstandete, radiale Erweiterungen aufweisen zur Aufnahme des Randbereichs der zentralen Öffnung in der flexiblen Haube. Damit wird erreicht, dass zwischen Haube und Rührerschaft eine definierte Verbindung besteht, die nicht verrutschen kann und möglichst dicht abschließt. Normalerweise wird Puffmais in trockner Form zu Popcorn verarbeitet; es entsteht daher allenfalls Dampf, wenn ein Maiskorn aufplatzt und die enthaltene Feuchtigkeit als Dampf entweicht. Dieser kann nötigenfalls entweichen, entweder durch infolge einer gasdurchlässigen Beschaffenheit der Haube durch jene selbst, oder aber durch eine zusätzliche (kleine) Öffnung in der Haube, oder durch eine gegenüber dem Rührerschaft nicht dicht abschließende zentrale Öffnung in der Haube.

Die beiden radialen Erweiterungen sollten vorzugsweise jeweils die Gestalt einer Scheibe oder eines Diskus aufweisen. Diese rundliche Form verhindert insbesondere bei der Reinigung des Gerätes Verletzungen einerseits und andererseits die Beschädigung der Haube aus textilem Gewebe.

Zum Zusammenbau des Rührers mit der Haube kann der Rührerschaft in dem relevanten Bereich entweder in zwei Teile getrennt werden, so dass ein Zusammenstecken von unterhalb und oberhalb der Haube möglich ist. Oder aber die Haube hat an ihrem Mittelpunkt eine flexibel dehnbare Öffnung, welche über die radialen Erweiterung gezogen werden kann. Weiterhin könnte eine radiale Erweiterung des Rührerschaftes einen reduzierten Durchmesser aufweisen, der durch die Haubenöffnung paßt, oder einen Schlitz, in welchen der Rand der Haubenöffnung einfädelbar ist.

Es hat sich als günstig erwiesen, dass die Kratzeinrichtung des Rührgerätes wenigstens eine freie Kante aufweist, insbesondere wenigstens eine freie Vorderseite, die innerhalb einer Ebene liegt. Eine in einer Ebene liegende Kante kann aud dem zumeist ebenfalls ebenen Boden eines handelsüblichen Kochtopfs bündig anliegen und entlang geschabt werden, um dort jedweden angesetzten Belag sofort und zuverlässig sowie blind abzukratzen, d.h. ohne dass die betreffende Person den Topfboden erkennen kann, der ja durch die Haube verdeckt ist.

Es liegt im Rahmen der Erfindung, dass die freie Vorderseite der Kratzeinrichtung eine kreuz- oder sternförmige Gestalt aufweist, bspw. aus einem kreuz- oder sternförmigen Blechzuschnitt besteht. Auch hitzebeständiger Kunstoff kann dafür Verwendung finden. Die Kreuz- bzw. Sternform erlaubt, dass die angesetzten Popcornkörner leicht vom Boden gelöst werden können, ohne dass die bereits aufgepufften Körner zu sehr zerdrückt werden. Die Enden des Sterns oder Kreuzes stützen sich dabei wie einzelne Füße auf dem Boden des Topfes ab und führen die gesamte Schabeeinrichtung bündig auf dem Boden entlang, wobei dort ggf. angesetzte Körner restlos gelöst werden.

Die stern- oder kreuzförmige Vorderkante kann an ihrer rückwärtigen Oberseite von einer Trageinrichtung gestützt werden, welche der Verbindung des Vorderkanten-Teils mit dem Schaft dient und in ihrem zentralen und/oder erhabenen Bereich eine Öffnung aufweist zum Hindurchstecken des Schaftes oder eines Verbindungsmittels zum Anschluß desselben. Dabei kann es sich um eine Steck- oder Schraubverbindung handeln. Beides erlaubt dem Benutzer eine leichte Reinigung.

Die Erfindung läßt sich dahingehend weiterbilden, dass die Verbindung zwischen Kratzeinrichtung einerseits und dem unteren Ende des Schaftes ein Gelenk, insbesondere ein Kugel- oder Schwenkgelenk, aufweist. Durch dieses Kugel- oder Schwenkgelenk muss der Benutzer am oberen Griff nur leichte Schwenkbewegungen mit wenig Kraft ausführen, wobei der Griff des Rührers mittig über der Haube und dem Topf verbleiben kann, während die Kratzeinrichtung am entgegengesetzen Ende des Rührers schwingende Bewegungen ausführt und dabei ein effizientes Durchrühren der gepufften Körner erlaubt.

Eine weitere, bevorzugte Konstruktionsvorschrift lautet, dass die Trageinrichtung in ihrem zentralen Bereich von dem Vorderteil der Kratzeinrichtung, insbesondere von einem dortigen Blechzuschnitt, abgehoben ist und mit diesem vor allem oder ausschließlich an dessen Peripherie in Verbindung steht. Somit kann die Trageinrichtung vorzugsweise eine kuppel- oder glockenartige Wölbung aufweisen, mit einem gegenüber der Peripherie erhabenen Zentralbereich, an welchem das untere Ende des Schaftes angeschlossen ist. Diese geometrische Form des Rührers führt wiederum dazu, dass bereits aufgepuffte Körner nicht zerdrückt werden, und erleichtern der Bedienerperson das Rühren, da die zwischen Kratz- und Trageinrichtung gelangenden Maiskörner an der glockenförmigen Wandung abrutschen und durch die bogenförmigen Öffnungen nach aussen zurück auf den Topfboden geleitet werden.

In seinem unteren Bereich sollte der Schaft des Rührers radial erweiterte Bereiche aufweisen, damit sich der Rührerschaft nicht ungewollt von der Trageinrichtung lösen kann, bspw. von etwa kugelförmiger oder kugelsegmentförmiger oder diskusförmiger Gestalt. Dabei liegt eine Erweiterung oberhalb einer Durchtrittsöffnung der Trageinrichtung, die andere unterhalb derselben. Da diese Form in direkten Druckkontakt mit den gepufften Körnern tritt, ist die kugelige Form wichtig, um die Körner nicht zu zerdrücken oder zu zerschneiden. Zur Reinigung sollte dieser untere, radial erweiterte Bereich von dem Schaft lösbar sein.

Der mittlere Schaftbereich zwischen den ober- und unterseitigen Erweiterungen kann zu seinem mittleren Bereich hin einen dickeren Querschnitt aufweisen als zu einem oder beiden seiner Enden hin. Dadurch wird die Effektivität beim Umrühren gesteigert.

Schließlich entspricht es der Lehre der Erfindung, dass der Schaft des Rührgerätes in seinem mittleren Bereich einen flächigen oder kreuz- oder sternförmigen Querschnitt aufweisen kann. Zwar kann der Schaft nahezu beliebige Geometrie aufweisen. Eine Stern- oder Kreuzform verbessert jedoch die Durchmischung des Rührgutes, bspw. auch beim Umrühren flüssiger Lebensmittel wie bspw. Milch.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erfindungsgemäße Popcorn-Rühr-Einrichtung in einer perspektivischen Ansicht;

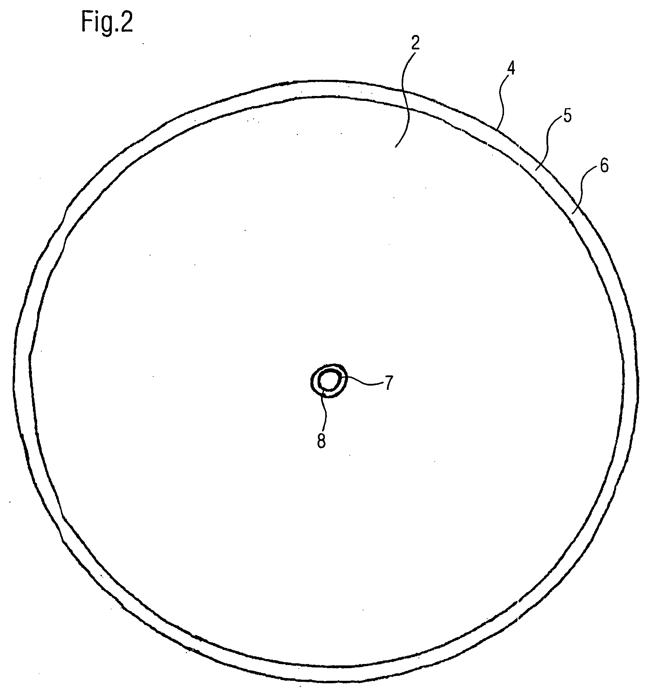

- Fig. 2: eine Draufsicht auf die flexible Haube der Popcorn-Rühr-Einrichtung aus Fig. 1;

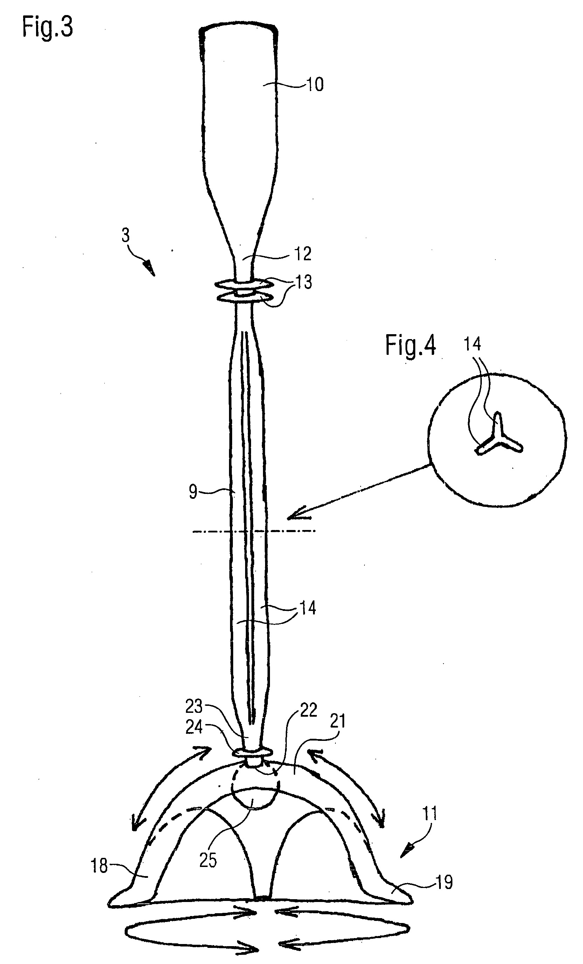

- Fig. 3: eine Seitenansicht auf das Rührgerät aus Fig. 1;
- Fig. 4: einen Schnitt durch die Fig. 3 quer durch den Schaft des Rührgerätes;

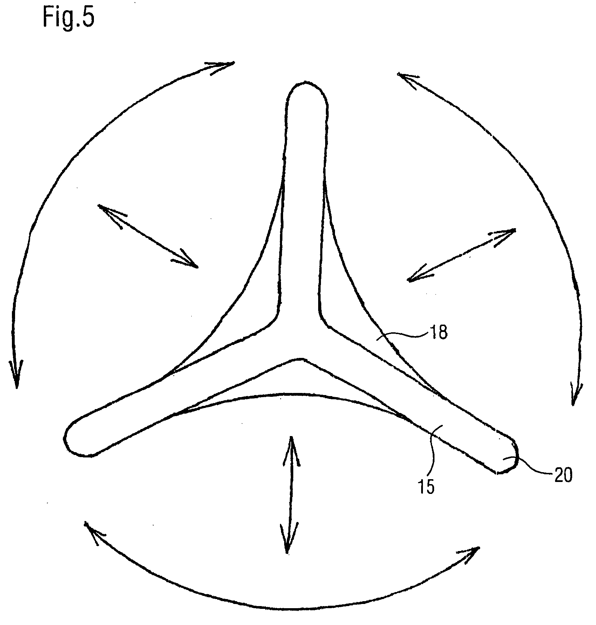

- Fig. 5: eine Unteransicht auf das Rührgerät aus Fig. 3.

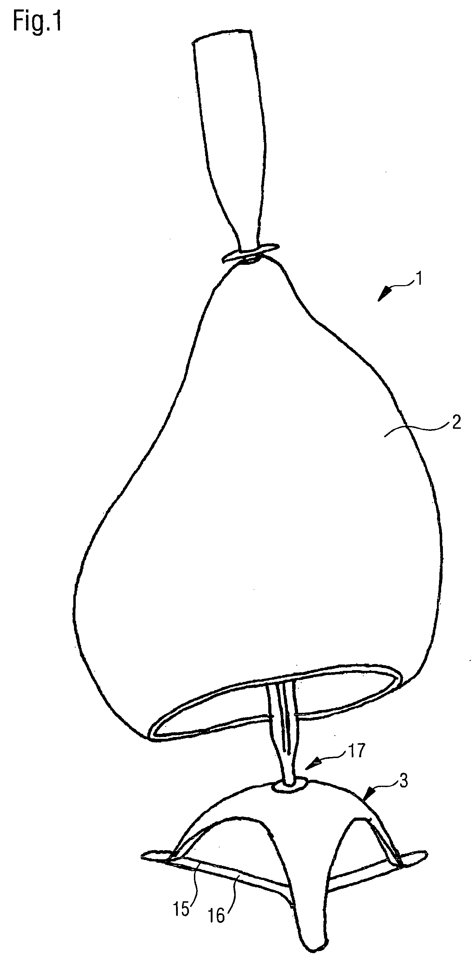

In Fig. 1 ist eine Vorrichtung 1 zur Herstellung von Popcorn zu sehen. Er umfaßt eine Haube 2 aus einem flexiblen, hitzebeständigen, feuerfesten Textilstoff sowie eine Rühreinrichtung 3.

Die Haube 2 kann ursprünglich aus einem ebenen Zuschnitt bestehen, der insbesondere einen kreisförmigen Umfang 4 aufweisen kann, entlang desselben ein Tunnel 5 entlangläuft für einen vorzugsweie in sich geschlossenen Gummizug 6. Dieser Gummizug 6 ist in der Lage, sich elastisch zusammenzuziehen und dabei den Durchmesser der Haube 2 nach innen zu verkleinern, so dass die Haube etwa eine Glocken- oder Kalottenform annimmt. Damit eignet sich die Haube 2 als Deckelersatz zum Aufsetzen auf herkömmliche Kochtöpfe, wobei der Gummizug 6 einen dortigen, nach außen gestülpten Topfrand untergreifen kann, um die Haube 2 auf dem Topf festzuhalten. Etwa in ihrem Zentrum weist die Haube 2 eine Durchstecköffnung 7 auf, deren Rand 8 durch einen Ring oder einen Gummizug stabilisiert ist.

Die Rühreinrichtung 3 hat eine langgestreckte Gestalt mit einem mittleren Schaftbereich 9, einem Handgriff 10 am oberen Ende des Schaftbereichs 9 und einer Kratzeinrichtung 11 am unteren Ende des Schaftbereichs 9. Der Schaftbereich 9 kann etwa die Länge eines Kochlöffelschaftes haben.

Der Handgriff 10 kann einen zylindrischen Querschnitt aufweisen, sich nach unten glatt verjüngend, könnte aber durchaus auch ergonomische Ausparungen zum Einlegen der Finger haben.

In dem Übergangsbereich 12 zwischen dem Handgriff 10 und dem mittleren Schaftbereich 9 kann der Querschnitt der Rühreinrichtung 3 verjüngt sein. Dort befinden sich in einem geringen Abstand von bspw. einigen Millimetern zwei radiale Erweiterungen 13, welche bspw. jeweils die Form einer Kreis- oder Diskusscheibe aufweisen können.

Die Rühreinrichtung 3 wird so weit durch die zentrale Durchstecköffnung 7 der Haube 2 gesteckt, bis der Rand 8 der Durchstecköffnung 7 zwischen den beiden radialen Erweiterungen 13 liegt. Diese radialen Erweiterungen 13 begrenzen den Bewegungsspielraum der Haube 2 und dienen damit deren Führung und Stabilisierung. Gleichzeitig können sie das Herausspritzen von Fett oder Öl durch die Durchstecköffnung 7 verhindern, auch wenn diese nicht gasdicht abgeschlossen ist, damit eventuell entstehender Dampf entweichen kann.

Der mittlere Schaftbereich 9 hat in der dargestellten Ausführungsform einen sternförmigen Querschnitt mit in seiner Längsrichtung verlaufenden, sich in radialer Richtung erstreckenden, fahnenartigen Ansätzen 14, welche bspw. äquidistanten um die Längsachse des Schaftbereichs 9 verteilt angeordnet sind. Eine solche Sternform erlaubt ein effizientes Durchmischen des Popcorns oder auch eines anderen, ggf. flüssigen Rührgutes wie bspw. Milch.

An ihrem unteren Ende verfügt die Rühreinrichtung 3 über einen Schieber 15 zum Lösen des ggf. angesetzten Rührgutes von dem Boden des betreffenden Kochgefäßes. Bevorzugt umfaßt dieser Schieber 15 eine flache Scheibe 16, bspw. von sternförmigem Zuschnitt. Während des Umrührens soll diese flache Scheibe 16 bündig auf dem Boden des betreffenden Kochgeschirrs anliegen und dort entlang geführt werden, so dass ein Umrühren "blind" möglich ist, d.h. trotz verdeckter Sicht infolge der aufgesetzten Haube 2. Dies flache Scheibe 16 dient damit der Parallelführung gegenüber dem Boden des betreffenden Kochgefäßes.

Um der Scheibe 16 trotz Verschwenken der Rühreinrichtung 3 - bspw. um einen Schwenkbereich in der Nähe der Durchstecköffnung 7 in der Haube 2 - eine Führung parallel zu dem Boden eines Gefäßes zu erlauben, ist zwischen dem Rührerschaft 9 und der Scheibe 16 der Kratzeinrichtung 15 eine gelenkige Verbindung 17 vorgesehen.

Zu diesem Zweck ist eine gewölbte und/oder stativartige Trageinrichtung 18 vorgesehen, welche locker mit dem Rührerschaft 9 verbunden ist, jedoch mit der Scheibe 16 der Kratzeinrichtung vorzugsweise fest verbunden ist, insbesondere indem sich die Füße 19 des Stativs auf je einem der Enden 20 der sternförmigen Scheibe 16 abstützen und mit jenen verbunden sind, bspw. verschweißt, verlötet oder verklebt. Die Füße 19 dieser stativartigen Trageinrichtung 18 erheben sich von den Enden 20 zunächst nahezu vertikal nach oben, wölben sich dann aber zunehmend nach innen und vereinigen sich schließlich in einem zentralen Bereich 21 der Trageinrichtung 18 nach Art einer Kuppel, insbesondere nach Art einer Hängekuppel mit mehreckigem, bspw. dreieckigem Grundriss. Eine solche Kuppelform hat sich als günstig erwiesen, da die Maiskörner entweder an den Bögen der Kuppel außen abgleiten oder durch die seitlichen Öffnungen der Kuppel leicht durch den Inneraum der kuppelförmigen Trageinrichtung 18 hindurch gelangen können, ohne sich dort festzusetzen und infolgedessen möglicherweise anzubrennen. Somit wird ein optimales Rührergebnis erreicht.

In dem zentralen Bereich 21 der Kuppel oder Trageinrichtung 18 befindet sich eine Durchstecköffnung 22 für das untere Ende des Rührerschaftes 9. Zu diesem Zweck verjüngt sich der Schaft 9 zu seinem unteren Bereich 23 hin bis auf einen Querschnitt, welcher etwas kleiner ist der Querschnitt der Durchsteckausnehmung 22, so dass ein gegenseitiges Verschwenken möglich ist, ohne zu klemmen. Um andererseits eine übermäßige axiale Verschiebung zwischen dem Rührerschaft 9 und der Trageinrichtung 18 zu vermeiden, damit von dem Handgriff 10 ausgehend nötigenfalls auch Druck oder Zug auf den Schieber 15 ausgeübt werden kann, weist der die Durchsteckausnehmung 22 durchgreifende Schaftbereich 23 zwei in axialer Richtung des Schaftes 9 beabstandete radiale Erweiterungen 24, 25 auf, deren Durchmesser jeweils bevorzugt größer ist als der Durchmesser der Durchsteckausnehmung 22. Während die obere Erweiterung 24 eine scheiben- oder diskusförmige Gestalt aufweisen kann, empfiehlt die Erfindung, der unteren Erweiterung 25 eine kugelförmige Gestalt zu erteilen. Die Oberfläche dieser Kugel hat einen erheblich kleineren Krümmungsradius als der Krümmungsradius des zentralen Bereichs 21 der Kuppel, so dass ein gegenseitiges Verschwenken zwischen Rührerschaft 9 und Trageinrichtung 18 sowie Schieber 15 ohne Behinderung möglich ist.

### Bezugszeichenliste

- 1: Vorrichtung
- 2: Haube
- 3: Rühreinrichtung
- 4: Umfang
- 5: Tunnel
- 6: Gummizug
- 7: Durchstecköffnung
- 8: Rand
- 9: Schaftbereich
- 10: Handgriff
- 11: Kratzeinrichtung
- 12: Übergangsbereich
- 13: Erweiterung
- 14: Ansatz
- 15: Schieber
- 16: Scheibe
- 17: Verbindung
- 18: Trageinrichtung
- 19: Fuß
- 20: Ende
- 21: Bereich
- 22: Durchstecköffnung
- 23: Schaftbereich
- 24: Erweiterung
- 25: Erweiterung

## Patentansprüche

1. Vorrichtung (1) zur Herstellung von Popcorn in einem Kochgefäß, insbesondere in einem Kochtopf, umfassend ein langgestrecktes Rührgerät (3) mit einem Schaft (9), der an seinem unteren Ende eine Kratzeinrichtung (11) zum Lösen von angesetztem Popcorn vom Boden des Kochgeschirrs aufweist, sowie eine hitzebeständige Haube (2) zum Überstülpen über das Kochgefäß, mit einer Öffnung (7) zum Hindurchstecken des Schaftes (9) des Rührgerätes (3) derart, dass sich die Kratzeinrichtung (11) unterhalb der hitzebeständigen Haube (2) befindet, **dadurch gekennzeichnet, dass**
a) die hitzebeständige Haube (2) aus einem flexiblen, textilen Material besteht und über den Rand des Kochgeschirrs stülpbar ist, und
b) der Schaft (9) des langgestreckten Rührgerätes (3) an seinem oberen Ende einen Griff (10) aufweist zum manuellen Führen des Rührgerätes (3), der sich oberhalb der flexiblen, hitzebeständigen Haube (2) befindet.

2. Vorrichtung (1) nach Anspruch 1, **dadurch gekennzeichnet, dass** die flexible, hitzebeständige Haube (2) aus einem feuerfesten Material besteht.

3. Vorrichtung (1) nach einem der Ansprüche 1 oder 2, **dadurch gekennzeichnet, dass** die flexible, hitzebeständige Haube (2) an ihrem Außenumfang (4) einen Gummizug (6) aufweist, welcher bestrebt ist, den Außenumfang (4) der Haube (2) zu verringern.

4. Vorrichtung (1) nach einem der vorhergehenden Ansprüche, **dadurch gekennzeichnet, dass** die flexible, hitzebeständige Haube (2) an ihrem Innenumfang (8) einen Ring bspw. aus Metall und/oder einen Gummizug aufweist zur Stabilisierung der Durchstecköffnung (7).

5. Vorrichtung (1) nach einem der vorhergehenden Ansprüche, **dadurch gekennzeichnet, dass** der Schaft (9) des Rührgerätes (3) zwei radiale Erweiterungen (13) aufweist mit einem axialen Abstand dazwischen zur Aufnahme des Randbereichs (8) der zentralen Öffnung (7) in der flexiblen Haube (2), wobei die beiden radialen Erweiterungen (13) vorzugsweise jeweils die Gestalt einer Scheibe oder eines Diskus aufweisen.

6. Vorrichtung (1) nach einem der vorhergehenden Ansprüche, **dadurch gekennzeichnet, dass** die Kratzeinrichtung (11) des Rührgerätes (3) wenigstens eine freie Kante aufweist, die innerhalb einer Ebene liegt.

7. Vorrichtung (1) nach einem der vorhergehenden Ansprüche, **dadurch gekennzeichnet, dass** die Kratzeinrichtung (11) des Rührgerätes (3) wenigstens eine freie Vorderseite (16) aufweist, die innerhalb einer Ebene liegt, und die vorzugsweise eine kreuz- oder sternförmige Gestalt aufweist, insbesondere aus einem kreuz- oder sternförmigen Blechzuschnitt besteht.

8. Vorrichtung (1) nach Anspruch 7, **dadurch gekennzeichnet, dass** die freie Vorderseite (16) der Kratzeinrichtung (11) und/oder der Blechzuschnitt an seiner Rückseite von einer Trageinrichtung (18) gestützt wird, welche der Verbindung der freien Vorderseite (16) bzw. des Blechzuschnittes mit dem Schaft (9) dient.

9. Vorrichtung (1) nach Anspruch 8, **dadurch gekennzeichnet, dass** die Trageinrichtung (18) in ihrem zentralen Bereich von dem der freien Vorderseite (16) bzw. dem Blechzuschnitt abgehoben ist und mit diesem vor allem oder ausschließlich an dessen Peripherie in Verbindung steht.

10. Vorrichtung (1) nach Anspruch 8 oder 9, **dadurch gekennzeichnet, dass** die Trageinrichtung (18) eine kuppel- oder glockenartige Wölbung aufweist, mit einem gegenüber der Peripherie erhabenen Zentralbereich, an welchem das untere Ende des Schaftes (9) angeschlossen ist.

11. Vorrichtung (1) nach einem der Ansprüche 8 bis 10, **dadurch gekennzeichnet, dass** die Trageinrichtung (18) in ihrem zentralen und/oder erhabenen Bereich eine Öffnung (22) aufweist zum Hindurchstecken des Schaftes (9) oder eines Verbindungsmittels zum Anschluss desselben.

12. Vorrichtung (1) nach einem der vorhergehenden Ansprüche, **dadurch gekennzeichnet, dass** die Verbindung zwischen Kratzeinrichtung (11) einerseits und dem unteren Ende des Schaftes (9) ein Gelenk, insbesondere ein Kugel- oder Schwenkgelenk aufweist oder wie ein solches gestaltet ist.

13. Vorrichtung (1) nach Anspruch 12, **dadurch gekennzeichnet, dass** der Schaft (9) an seinem unteren Ende einen radial verjüngten Bereich (23) aufweist, der oberhalb und unterhalb von radial erweiterten Bereichen (24,25) umgeben ist, wobei der untere, radial erweiterte Bereich (25) vorzugsweise eine etwa kugelförmige oder kugelsegmentförmige Gestalt aufweist.

14. Vorrichtung (1) nach Anspruch 13, **dadurch gekennzeichnet, dass** der untere, radial erweiterte Bereich (25) von dem Schaft (9) lösbar ist.

15. Vorrichtung (1) nach einem der vorhergehenden Ansprüche, **dadurch gekennzeichnet, dass** der Schaft (9) des Rührgerätes (3) in seinem mittleren Bereich einen flächigen oder kreuz- oder sternförmigen Querschnitt aufweist.

## Claims

1. Device (1) for the preparation of popcorn in a cooking vessel, in particular in a cooking pot, comprising an elongated stirrer (3) with a shaft (9) that exhibits a scratcher unit (11) at its lower end for loosening of sticking popcorn from the bottom of the cookware, as well as a heat resistant hood (2) for putting over the cooking vessel with an opening (7) for sticking through the shaft of the stirrer (3) so that the scratcher unit (11) is located under the heat resistant hood (2), **characterized by** the fact that
a) the heat resistant hood (2) is made of a flexible textile material that can be pulled over the rim of the cookware, and
b) the shaft (9) of the elongated stirrer (3) exhibits a handle (10) at its upper end, which is placed outside of and above the flexible heat resistant hood (2) for manual operation of the stirrer (3).

2. Device (1) according to claim 1, **characterized by** the fact that the flexible heat resistant hood (2) consists of a fireproof material.

3. Device (1) according to claims 1 or 2, **characterized by** the fact that the flexible heat resistant hood (2) exhibits an elastic band (6) at its outer circumference (4), which has the tendency to reduce the outer circumference (4) of the hood (2).

4. Device (1) according to one of the foregoing claims, **characterized by** the fact that the flexible heat resistant hood (2) exhibits a ring at its inner circumference (8), for example made of metal, and/or an elastic band for stabilizing the stick-through opening (7).

5. Device (1) according to one of the foregoing claims, **characterized by** the fact that the shaft (9) of the stirrer (3) exhibits two radial extensions (13) with an axial distance in between for taking up the edge area (8) of the central opening (7) in the flexible hood (2), whereby both radial extensions (13) each preferably exhibit the shape of a washer or discus.

6. Device (1) according to one of the foregoing claims, **characterized by** the fact that the scratcher unit (11) of the stirrer (3) exhibits at least one free edge, which is located within one single plane.

7. Device (1) according to one of the foregoing claims, **characterized by** the fact that the scratcher unit (11) of the stirrer (3) exhibits at least one free front side (16), which is located within one single plane and preferably exhibits a cross or star-like shape, in particular is made up of a cross or star-shaped cut sheet metal blank.

8. Device (1) according to claim 7, **characterized by** the fact that the free front side (16) of the scratcher unit (11) and/or the cut sheet metal blank is supported at its rear side by a carrier unit (18), which serves for connecting the free front side (16) or the cut sheet metal blank respectively to the shaft (9).

9. Device (1) according to claim 8, **characterized by** the fact that the carrier unit (18) in its central section is located at a distance from the one of the free front side (16) or of the cut sheet metal blank respectively, and is primarily or exclusively connected to the same at its periphery.

10. Device (1) according to claim 8 or 9, **characterized by** the fact that the carrier unit (18) exhibits a dome or bell-shaped vault with a central area elevated above in relation to the periphery, to which the lower end of the shaft (9) is connected.

11. Device (1) according to one of the claims 8 through 10, **characterized by** the fact that the carrier unit (18) exhibits an opening (22) in its central and/or elevated area for sticking through the shaft (9), or of some means of connection for attaching the same.

12. Device (1) according to one of the foregoing claims, **characterized by** the fact that the connection between the scratcher unit (11) at the one hand and the lower end of the shaft (9) at the other hand exhibits a joint, particularly a ball or swivel joint, or is designed as such a one.

13. Device (1) according to claim 12, **characterized by** the fact that the shaft (9) exhibits a radially tapered section (23) at its lower end, which is above and below enclosed by radially extended sections (24, 25), whereby the lower radially extended area (25) preferably exhibits an approximately spherical or spherical segment type shape.

14. Device (1) according to claim 13, **characterized by** the fact that the lower radially extended area (25) is detachable from shaft (9).

15. Device (1) according to one of the foregoing claims, **characterized by** the fact that the shaft (9) of the stirrer (3) in its central area exhibits a planar or star-shaped cross section.

## Revendications

1. Dispositif (1) pour produire du popcorn dans un récipient de cuisson, en particulier dans une casserole, comprenant un appareil agitateur (3) allongé avec une tige (9) qui présente à son extrémité inférieure un dispositif de raclage (11) servant à détacher le popcorn adhérant au fond du récipient de cuisson, ainsi qu'une cloche (2) résistante à la chaleur, destinée à être placée sur le récipient de cuisson, comportant une ouverture (7) pour permettre le passage de la tige (9) de l'appareil agitateur (3) de sorte que le dispositif de raclage (11) se trouve en dessous de la cloche (2) résistante à la chaleur, **caractérisé en ce que**
a) la cloche (2) résistante à la chaleur est réalisée à partir d'un matériau souple, textile et peut être placée au-dessus du bord du récipient de cuisson, et
b) la tige (9) de l'appareil agitateur (3) allongé présente à son extrémité supérieure une poignée (10) servant à guider manuellement l'appareil agitateur (3), ladite poignée se trouvant au-dessus de la cloche (2) souple, résistante à la chaleur.

2. Dispositif (1) selon la revendication 1, **caractérisé en ce que** la cloche (2) souple, résistante à la chaleur est réalisée à partir d'un matériau résistant au feu.

3. Dispositif (1) selon l'une des revendications 1 ou 2, **caractérisé en ce que** la cloche (2) souple, résistante à la chaleur présente sur sa circonférence extérieure (4) une bande élastique (6) dont le but est de réduire la circonférence extérieure (4) de la cloche (2).

4. Dispositif (1) selon l'une des revendications précédentes, **caractérisé en ce que** la cloche (2) souple, résistante à la chaleur présente sur sa circonférence intérieure (8) un anneau, qui est en métal par exemple, et/ou une bande élastique pour la stabilisation de l'ouverture d'introduction (7).

5. Dispositif (1) selon l'une des revendications précédentes, **caractérisé en ce que** la tige (9) de l'appareil agitateur (3) présente deux extensions (13) radiales espacées axialement pour recevoir la zone de bord (8) de l'ouverture (7) centrale dans la cloche (2) souple, les deux extensions (13) radiales ayant de préférence chacune une forme circulaire ou la forme d'un disque.

6. Dispositif (1) selon l'une des revendications précédentes, **caractérisé en ce que** le dispositif de raclage (11) de l'appareil agitateur (3) présente au moins un bord libre qui se trouve dans un plan.

7. Dispositif (1) selon l'une des revendications précédentes, **caractérisé en ce que** le dispositif de raclage (11) de l'appareil agitateur (3) présente au moins une face avant (16) libre qui se trouve dans un plan et qui est de préférence en forme de croix ou d'étoile, en particulier composée d'une découpe de tôle en forme de croix ou d'étoile.

8. Dispositif (1) selon la revendication 7, **caractérisé en ce que** la face avant (16) libre du dispositif de raclage (11) et/ou la découpe de tôle est supportée sur sa face arrière par un moyen de support (18) qui sert à relier la face avant (16) libre ou la découpe de tôle à la tige (9).

9. Dispositif (1) selon la revendication 8, **caractérisé en ce que** le moyen de support (18) dans sa zone centrale est soulevé de celle de la face avant (16) libre ou de la découpe de tôle et communique avec cette dernière notamment ou exclusivement au niveau de sa périphérie.

10. Dispositif (1) selon la revendication 8 ou 9, **caractérisé en ce que** le moyen de support (18) présente une courbure en forme de coupole ou de cloche, avec une zone centrale convexe par rapport à la périphérie, l'extrémité inférieure de la tige (9) étant reliée à ladite zone centrale.

11. Dispositif (1) selon l'une des revendications 8 à 10, **caractérisé en ce que** le moyen de support (18) présente dans sa zone centrale et/ou convexe une ouverture (22) pour introduire la tige (9) ou un moyen de liaison pour son raccordement.

12. Dispositif (1) selon l'une des revendications précédentes, **caractérisé en ce que** la liaison entre le dispositif de raclage (11) d'une part et l'extrémité inférieure de la tige (9) présente une articulation, en particulier une articulation à rotule ou pivotante ou conçue comme telle.

13. Dispositif (1) selon la revendication 12, **caractérisé en ce que** la tige (9) présente sur son extrémité inférieure une zone (23) diminuant de manière radiale, ladite zone est entourée en dessus et en dessous de zones (24, 25) étendues de manière radiale, la zone inférieure (25) étendue radialement ayant de préférence une forme approximativement sphérique ou de segment sphérique.

14. Dispositif (1) selon la revendication 13, **caractérisé en ce que** la zone inférieure (25) étendue radialement est désolidarisable de la tige (9).

15. Dispositif (1) selon l'une des revendications précédentes, **caractérisé en ce que** la tige (9) de l'appareil agitateur (3) présente dans sa zone médiane une section transversale plane ou en forme de croix ou d'étoile.
